# EUROPÄISCHE PATENTSCHRIFT

(11) **EP 0 532 886 B1**
(45) Veröffentlichungstag und Bekanntmachung des Hinweises auf die Patenterteilung: **14.12.1994**
(21) Anmeldenummer: 92113359.1
(22) Anmeldetag: 05.08.1992
(51) Int. Cl.: F16L 5/02, H02G 3/22, A62C 2/06

(54) **Vorrichtung zur Brandabschottung einer Wandöffnung für die Durchführung von Leitungen**
Fire barrier device through a wall opening for the penetration of conduits
Dispositif coupe-feu placé dans l'ouverture d'une paroi pour la traversée de conduits

(30) Priorität: 19.09.1991 DE 4131155
(43) Veröffentlichungstag der Anmeldung: 24.03.1993
(73) Patentinhaber: Hauff, Werner, D-89561 Dischingen (DE)
(72) Erfinder: Hauff, Werner, D-89561 Dischingen (DE)
(74) Vertreter: Fay, Hermann, Dipl.-Phys. Dr.

(56) Entgegenhaltungen:
- EP-A- 0 360 004
- DE-A- 2 745 370
- DE-A- 3 126 872
- NL-A- 8 302 140

## Beschreibung

Die Erfindung betrifft eine Vorrichtung zur Brandabschottung einer Wandöffnung für die Durchführung von Leitungen, wie elektrische Kabel, Rohre oder dergl., durch eine Wand, mit einem abgedichtet gegen die Wand in der Wandöffnung angeordneten Schottkasten, der eine die Leitungen aufnehmende Durchführungsöffnung bildet und ein ein Brandschutzmittel enthält, das erst im Brandfall die Durchführungsöffnung verschließt und dabei sein ursprüngliches Volumen infolge von Wärmeeinwirkung entsprechend vergrößert (siehe DE-U-9 011 952).

Vorrichtungen dieser Art besitzen den Vorteil, daß das Brandschutzmittel erst im Brandfall die Durchführungsöffnung verschließt, die vorher immer offen ist, und daß daher Änderungen oder Ergänzungen in der Leitungsbelegung der Durchführungsöffnung vorgenommen werden können, ohne daß es jedesmal einer vorhergehenden Freilegung der Durchführungsöffnung durch Bohr- oder Stemmarbeiten bedarf. - Bei bekannten Vorrichtungen dieser Art (vgl. beispielsweise die Firmendruckschrift der ASEA Brown Boveri AG "Schottung von Wand- und Deckendurchbrüchen", ABB-ZST 31 (12.88 1000 HD), Seite 5), ist das Brandschutzmittel ein Intumeszenzmaterial, das im Brandfall infolge der Wärmeeinwirkung aufschäumt und sein ursprüngliches Volumen vergrößert, so daß es die nach der Leitungsbelegung noch frei gebliebenen Bereiche der Durchführungsöffnung verschließt. Der Schottkasten ist ein auf beiden Seiten der Wand offener Blechkasten, dessen Wände innenseitig mit aus dem Intumeszenzmaterial bestehenden, luftdicht gekapselten Blöcken ausgekleidet sind.

Der Einsatzbereich dieser bekannten Vorrichtungen ist beschränkt. Der Schottkasten kann im Innenmaß seines Querschnitts nicht nennenswert größer als etwa 70 x 240 mm sein, weil sonst die Menge des Intumeszenzmaterials, die im Schottkasten untergebracht werden kann, nicht ausreichen würde, im Brandfall die Durchführungsöffnung wirklich zuverlässig zu schließen. Weiter besteht keine Möglichkeit, mit den Leitungen auch eine Leitungspritsche durch den Schottkasten hindurchzuführen, ohne im Brandfall den wirksamen Verschluß der Durchführungsöffnung zu gefährden.

Der Erfindung liegt die Aufgabe zugrunde, eine Vorrichtung der eingangs genannten Art so auszubilden, daß auch bei größeren und großen Querschnittsinnenmaßen der Durchführungsöffnung eine sichere und anhaltende Brandschutzwirkung in der Durchführungsöffnung gewährleistet ist, und zwar auch dann, wenn mit den Leitungen eine sie tragende Leitungspritsche die Durchführungsöffnung durchsetzt.

Diese Aufgabe wird nach der Erfindung dadurch gelöst, daß das Brandschutzmittel von fließfähiger Beschaffenheit ist und sich bei seiner Volumenvergrößerung unter der Wärmeeinwirkung auch verfestigt, daß ferner der Schottkasten auf beiden Seiten der Wand wärmeleitende Stirnwände besitzt und zwischen diesen Stirnwänden ein druckdichtes, das Brandschutzmittel enthaltendes Behältnis bildet, in dem das Brandschutzmittel selbst und/oder ein zusätzlich im Behältnis enthaltenes Treibmittel durch seine Erwärmung im Brandfall einen Druck aufbaut, und daß das Behältnis von der Durchführungsöffnung durch eine Trennwand abgeteilt ist, die sich abhängig vom Druck im Behältnis öffnet und das Brandschutzmittel in die Durchführungsöffnung ausfließen läßt. In bevorzugter Ausführungsform ist das Behältnis oberhalb der Durchführungsöffnung angeordnet und die ebenfalls wärmeleitende Trennwand vom Boden des Behältnisses gebildet, so daß bei geöffneter Trennwand das Brandschutzmittel nicht nur unter dem im Behältnis entstandenen Druck, sondern auch unter der Wirkung seines eigenen Gewichts in die Durchführungsöffnung fließt.

Im Ergebnis beinhaltet das Behältnis einen großen Vorrat an Brandschutzmittel, der sich außerhalb der Durchführungsöffnung befindet und daher die Größe des für die Leitungsbelegung zur Verfügung stehenden Innenquerschnitts der Druchführungsöffnung nicht beeinträchtigt. Erst im Brandfall gelangt das Brandschutzmittel durch die sich dann öffnende Trennwand in die Durchführungsöffnung, wobei die Öffnung der Trennwand selbsttätig aufgrund der im Brandfall entstehenden Wärme und des dadurch im Behältnis erzeugten Druckes stattfindet. Nach dem Öffnen der Trennwand dringt das Brandschutzmittel in alle Zwischenräume ein, die zwischen den Leitungen selbst, zwischen diesen und einer sie in der Durchführungsöffnung gegebenenfalls aufnehmenden Leitungspritsche, sowie zwischen der Leitungspritsche und den Wänden der Durchführungsöffnung bestehen. Daher ist es bei der erfindungsgemäßen Vorrichtung ohne weiteres möglich, mit den Leitungen auch eine Leitungspritsche durch die Durchführungsöffnung hindurchlaufen zu lassen, ohne dadurch die Brandschutzwirkung der Vorrichtung im Brandfall zu gefährden. Erst in der Durchführungsöffnung beginnt das Brandschutzmittel unter Volumenvergrößerung aufzuschäumen und sich zu verfestigen. Die dafür benötigte Temperatur liegt geringfügig über derjenigen, bei der der Druckanstieg im Behältnis zur Öffnung der Trennwand führt. Diese beiden Temperaturen können durch geeignete Wahl des Brandschutzmittels und gegebenenfalls des Treibmittels unschwer passend aufeinander abgestimmt werden.

Zweckmäßigerweise erstrecken sich das Behältnis und die Trennwand über die gesamte Grundrißfläche der Durchführungsöffnung, wodurch sich der Vorteil ergibt, im Brandfall die Durchführungsöffnung über ihre gesamte Grundrißfläche mit dem Brandschutzmittel beschicken zu können.

Das Öffnen der Trennwand im Brandfall unter der Wirkung des im Behältnis entstehenden Drucks kann auf verschiedene Weise erfolgen, beispielsweise durch Zerstören der Trennwand, wie Aufplatzen, Zerreißen oder dergl., unter Ausnutzung einer nur begrenzten, insbes. durch Sollbruchstellen geschwächten Festigkeit der Trennwand. Besser aber ist es, in der Trennwand Ventile anzuordnen, die sich unter dem im Behältnis entstehenden Druck öffnen. Durch geeignete Verteilung dieser Ventile über die Fläche der Trennwand ist es möglich, die Durchführungsöffnung bereichsweise mit dem Brandschutzmittel mengenmäßig unterschiedlich, z. B. in den endseitigen Bereiche stärker als im mittleren Bereich zu beaufschlagen. Auch ist bei solchen Ventilen der Druck, unter dem sie öffnen, leicht vorzugeben, vorzugsweise dadurch, daß die Ventile unter der Kraft von Ventilfedern an einem Ventilsitz anliegende Ventilkörper aufweisen, wobei der im Behältnis entstehende Druck die Ventilkörper gegen die Kraft der Ventilfedern von ihrem Ventilsitz abhebt und dadurch die Ventile öffnet.

Um die zur Verfügung stehende Menge an Brandschutzmittel zu vergrößern, ohne das Behältnis in der Wandöffnung und damit deren Querschnitt selbst entsprechend vergrößern zu müssen, kann es sich empfehlen, daß zusätzlich zum Behältnis außerhalb der Wandöffnung auf einer Seite oder beiden Seiten der Wand druckdichte Zusatzbehältnisse für das Brandschutzmittel und/oder Treibmittel vorgesehen sind, die mit dem Behältnis so in Verbindung stehen, daß das Brandschutz- und/oder Treibmittel aus den Zusatzbehältnissen in das Behältnis nachfließen kann, wenn nach dem Öffnen der Trennwand das Brandschutzmittel aus dem Behältnis in die Durchführungsöffnung austritt. Damit das Behältnis oder die Zusatzbehältnisse stets mit dem Brandschutz- und/oder Treibmittel gefüllt sind, besteht die Möglichkeit, daß das Behältnis oder die Zusatzbehältnisse über ein Rückschlagventil an eine Verbindungsleitung angeschlossen sind, die mit einem Vorratsgefäß oder einem Versorgungsnetz für das Brandschutz- und/oder Treibmittel in Verbindung steht. Das Rückschlagventil gewährleitet dabei den Druckaufbau im Brandfall trotz der Verbindungsleitung.

In einer weiteren vorteilhaften Ausbildung der Erfindung sind auf beiden Seiten der Wand an den Stirnwänden in die Durchführungsöffnung hängende Schürzen aus einem die Wärme gut leitenden Werkstoff vorgesehen, die in wärmeleitender Verbindung mit den Stirnwänden stehen, mit ihrem unteren freien Rand auf den Leitungen liegen und die Durchführungsöffnung in Leitungslängsrichtung nach außen abdecken. Zweckmäßigerweise tragen die Schürzen an ihrem unteren Rand zwischen die Leitungen fallende Fransen. Diese Schürzen schützen einerseits in einfacher Weise gegen Zug durch die Durchführungsöffnung und bilden damit eine Rauchgassperre schon bevor im Brandfall der Verschluß der Durchführungsöffnung erfolgt ist. Arbeiten zur Änderung der Leitungsbelegung werden dadruch nicht erschwert, zumal dann, wenn die Schürzen an den Stirnwänden gelenkig gehalten und dadurch nach außen und aufwärts gegen die Stirnwände verschwenkbar sind, in welcher Stellung die Schürzen beispielsweise am Schottkasten eingerastet werden können, damit sie aus dem Wege sind, während Belegungsarbeiten in der Durchführungsöffnung stattfinden. Unabhängig von dieser Anordnung der Schürzen im einzelnen tragen die Schürzen vor allem aber andererseits auch dazu bei, im Brandfall Wärme aus der Umgebung aufzunehmen und auf das Behältnis zu übertragen. Vorzugsweise bestehen dazu die Schürzen aus einem Kupferdrahtgewebe, das wegen seiner sehr großen Wärmeleitfähigkeit auch für einen guten Flammenschutz besonders geeignet ist. Der Wärmeübergang von den Schürzen auf die Stirnwände des Behältnisses kann leicht dadurch beeinflußt werden, daß die Schürzen die Stirnwände ganz oder teilweise bedecken, so daß eine genügend große Berührungsfläche zwischen den Schürzen und den Stirnwänden besteht. Sind Zusatzbehältnisse vorgesehen, empfiehlt es sich, daß auch deren Wände ganz oder teilweise wärmeleitend sind und mit den Schürzen in wärmeleitender Verbindung stehen. - Der Wärmeübergang im Brandfall auf die Stirnwände kann außer durch die Schürzen weiter dadurch beeinflußt werden, daß die Stirnwände außen ganz oder teilweise mit Wärmeschutzplatten aus einem unbrennbaren, die Wärme schlecht leitenden Werkstoff bedeckt sind. Sind dabei auch die die Stirnwände ganz oder teilweise bedeckenden Schürzen vorhanden, kann es sich empfehlen, die Anordnung so zu treffen, daß die die Stirnwände bedeckenden Schürzenteile zwischen den Stirnwänden und den Wärmeschutzplatten liegen. Auf jeden Fall kann so im Brandfall der Wärmeübergang aus der Umgebung auf das Behältnis und somit der Zeitpunkt innerhalb des Brandgeschehens, zu dem sich im Behältnis der für das Öffnen der Trennwand erforderliche Druck aufgebaut hat und das Brandschutzmittel in die Durchführungsöffnung austritt, nach Wunsch dosiert und beeinflußt werden.

Die Wärmeschutzplatten bestehen zweckmäßigerweise aus Kalziumsilikat. Zumindest die Stirnwände des Schottkastens und die Trennwand bestehen vorzugsweise aus Metall, beispielsweise aus Stahlblech. Bezüglich der Auswahl des Brandschutz- und des Treibmittels empfiehlt sich die Verwendung einer wässerigen Schlämme aus fenkörnigen festen Intumeszenzmaterials als Brandschutzmittel und die Verwendung von Aluminiumhydroxid Al(OH)₃ als Treibmittel.

Im folgenden wird die Erfindung an in der Zeichnung dargestellten Ausführungsbeispielen näher erläutert; es zeigen in schematischer Darstellung:
- Fig. 1: eine Abschottungsvorrichtung in einem senkrechten, in Leitungslängsrichtung verlaufenden Schnitt,
- Fig. 2: eine andere Ausführungsform der Abschottungsvorrichtung in einer der Fig. 1 entsprechenden Darstellung,
- Fig. 3: eine weitere Ausführungsform der Abschottungsvorrichtung in einer den Fig. 1 und 2 entsprechenden Darstellung, und
- Fig. 4: eine nochmals andere Ausführungsform einer erfindungsgemäßen Abschottungsvorrichtung, wiederum in einer den Fig. 1 bis 3 entsprechenden Darstellung.

Die in der Zeichnung dargestellten Vorrichtungen dienen zur Brandabschottung einer Wandöffnung 2 für die Durchführung von Leitungen 1, wie elektrische Kabel, Rohre oder dergl., durch eine Wand 3. Die Vorrichtung umfaßt einen in der Wandöffnung 2 angeordneten Schottkasten 4, zwischen dem und der Wand 3 eine Abdichtung 5 vorgesehen ist. Der Schottkasten 4 ist auf der unteren Laibungsfläche 2.2 der Wandöffnung 2 durch Blöcke 6 aus beispielsweise verfestigter Steinwolle abgestützt, die sich entlang der seitlichen Laibungswände der Wandöffnung erstrecken. Zwischen diesen Blöcken 6 bildet der Schottkasten 4 eine Durchführungsöffnung 7 für die Leitungen 1, die auf einer Leitungspritsche 8 liegen, welche die Durchführungsöffnung 7 durchsetzt.

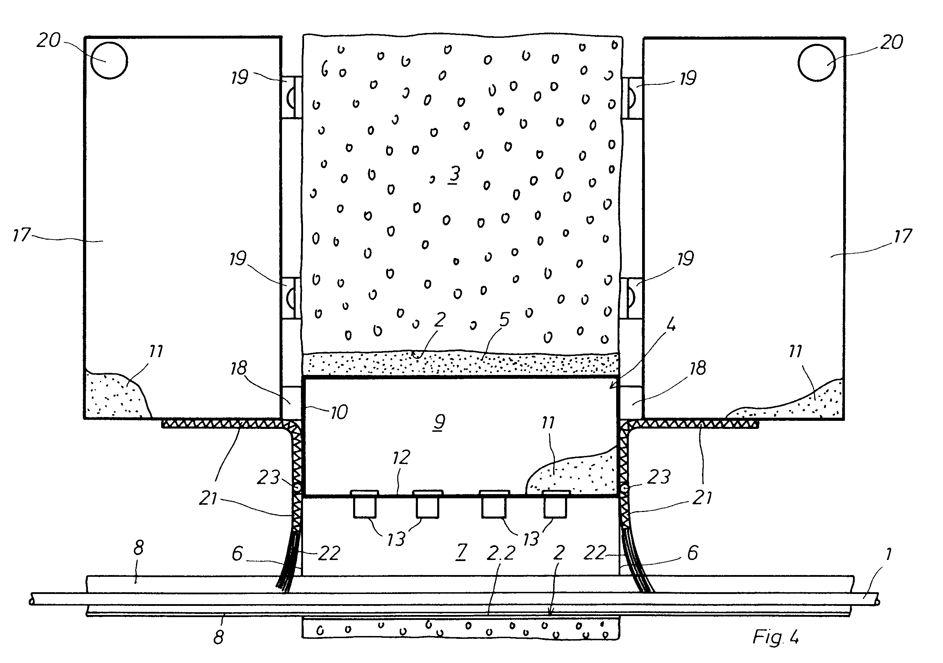

Der Schottkasten 4 besitzt auf beiden Seiten der Wand 3 wärmeleitende Stirnwände 10 aus beispielsweise Stahlblech. Zwischen diesen Stirnwänden 10 bildet der Schottkasten ein druckfestes und druckdichtes Behältnis 9, welches ein bei 11 lediglich angedeutetes flüssiges Brandschutzmittel enthält, das die Eigenschaft besitzt, in der Wärme des Brandfalls sich unter Volumenvergrößerung zu verfestigen. Durch die im Brandfall entstehende Wärme wird das Behältnis 9 un das in ihm enthaltende Brandschutzmittel 11 sowie ein gegebenenfalls zusätzlich im Behältnis 9 enthaltendes Treibmittel erwärmt, wodurch das Brandschutzmittel und/oder das Treibmittel, insbes. durch Änderung des Aggregatzustandes, der chemischen Beschaffenheit oder dergl., einen erheblich über den Umgebungsdruck ansteigenden Innendruck aufbaut, und zwar schon bei einer Temperatur, bei der sich das Brandschutzmittel noch nicht verfestigt. Das Behältnis 9 ist von der Durchführungsöffnung 7 durch eine Trennwand 12 abgeteilt, die sich in noch näher zu beschreibender Weise unter dem sich im Behältnis 9 aufbauenden Druck öffnet und das Brandschutzmittel 11 in die Durchführungsöffnung 7 ausfließen läßt, wo es aufgeschäumt und sich verfestigt und im Ergebnis die Durchführungsöffnung 7 verschließt. Das Behältnis 9 ist oberhalb der Durchführungsöffnung 7 angeordnet und die ebenfalls aus Metall bestehende und damit wärmeleitende Trennwand 12 ist vom Boden des Behältnisses 9 gebildet. Daher gelagt das Brandschutzmittel 11 nach dem Öffnen der Trennwand 12 nicht nur unter der Wirkung des im Behältnis 9 herrschenden Druckes, sondern auch unter der Wirkung des eigenen Gewichts in die Durchführungsöffnung 7. Das Behältnis 9 und die Trennwand 12 erstrecken sich über die gesamte Grundrißfläche der Durchführungsöffnung 7, also nicht nur in Leitungslängsrichtung über die gesamte Wanddicke, sondern auch quer dazu über die gesamte Breite der Durchführungsöffnung 7. In der Trennwand 12 sind, verteilt über deren Grundrißfläche, Ventile 13 angeordnet, die sich unter dem im Behältnis 9 aufbauenden Druck öffnen. Diese Ventile 13 besitzen unter der Kraft von Ventilfedern 14 einem Ventilsitz 15 anliegende Ventilkörper 16. Die Ventilfedern 14 halten den Ventilkörper 16 gegen den im Behältnis 9 herrschenden Druck am Ventilsitz 15. Übersteigt der Druck im Behältnis 9 die Kraft der Ventilfedern 14, werden vom Innendruck die Ventilkörper 16 gegen die Kraft der Ventilfedern 14 von ihrem Ventilsitz 15 abgehoben, wodurch die Ventile 13 sich öffnen und das Brandschutzmittel 11 in die Durchführungsöffnung 7 ausfließen lassen. Zusätzlich zum Behältnis 9 können, wie es in Fig. 4 dargestellt ist, außerhalb der Wandöffnung 2 auf einer Seite oder beiden Seiten der Wand 3 druckfeste und druckdichte Zusatzbehältnisse 17 für das Brandschutzmittel und/oder Treibmittel vorgesehen sein, die mit Einrichtungen 19 an der Wand 3 gehalten sind und über Anschlußstücke 18 so mit dem Behältnis 9 in Verbindung stehen, daß das Brandschutz- und/oder Treibmittel aus den Zusatzbehältnissen 17 in das Behältnis 9 nachströmen kann, wenn nach dem Öffnen der Trennwand 12 das Brandschutzmittel aus dem Behältnis 9 in die Durchführungsöffnung 7 austritt. Die Zusatzbehältnisse 17 bieten dabei den Vorteil einer großen Menge an zur Verfügung stehendem Brandschutzmittel, ohne daß dafür das vom Schottkasten 4 selbst unmittelbar gebildete und in der Wandöffnung 2 angeordnete Behältnis 9 entsprechend vergrößert werden muß. Im Falle solcher Zusatzbehältnisse 17 kann daher bei gleicher Menge an Brandschutzmittel das vom Schottkasten 4 gebildete Behältnis 9 entsprechend kleiner sein. Damit das Behältnis 9 und die Zusatzbehältnisse 17 stets mit dem Brandschutz- und/oder Treibmittel gefüllt sind, können das Behältnis 9 oder die Zusatzbehältnisse 17 über ein in der Zeichnung nicht dargestelltes Rückschlagventil und eine in der Zeichnung ebenfalls nicht wiedergegebene Verbindungsleitung mit einem Vorratsgefäß oder einem Versorgungsnetz für das Brandschutz- und/oder Treibmittel in Verbindung stehen, wobei auch das Vorratsgefäß oder das Versorgungsnetz in der Zeichnung der Einfachheit und Übersichtlichkeit wegen nicht dargestellt sind. In der Zeichnung erkennbar ist am Behältnis 9 bzw. an den Zusatzbehältnissen 17 lediglich der Anschluß 20 für das Rückschlagventil und die Verbindungsleitung.

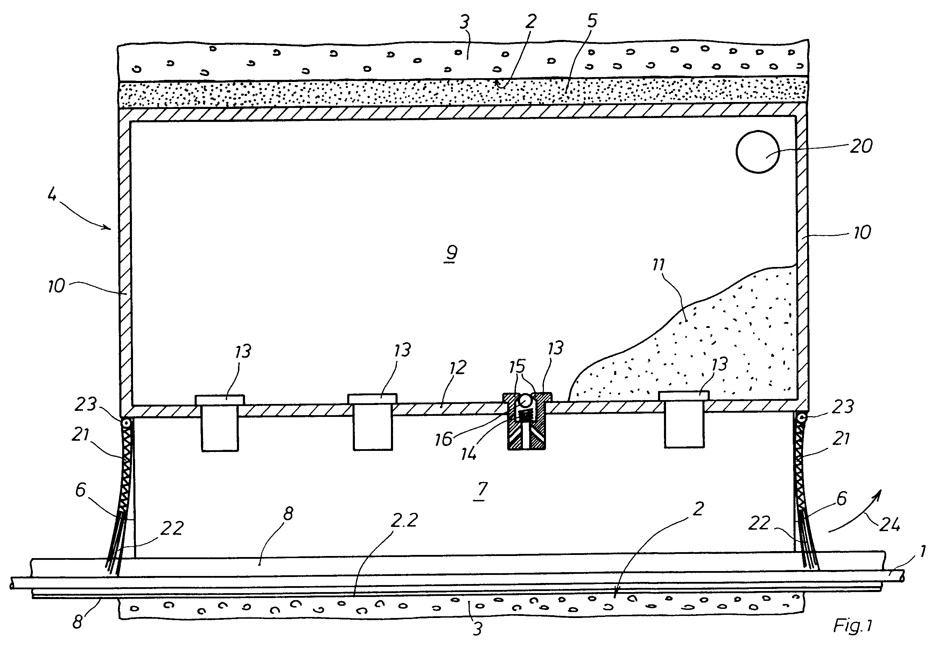

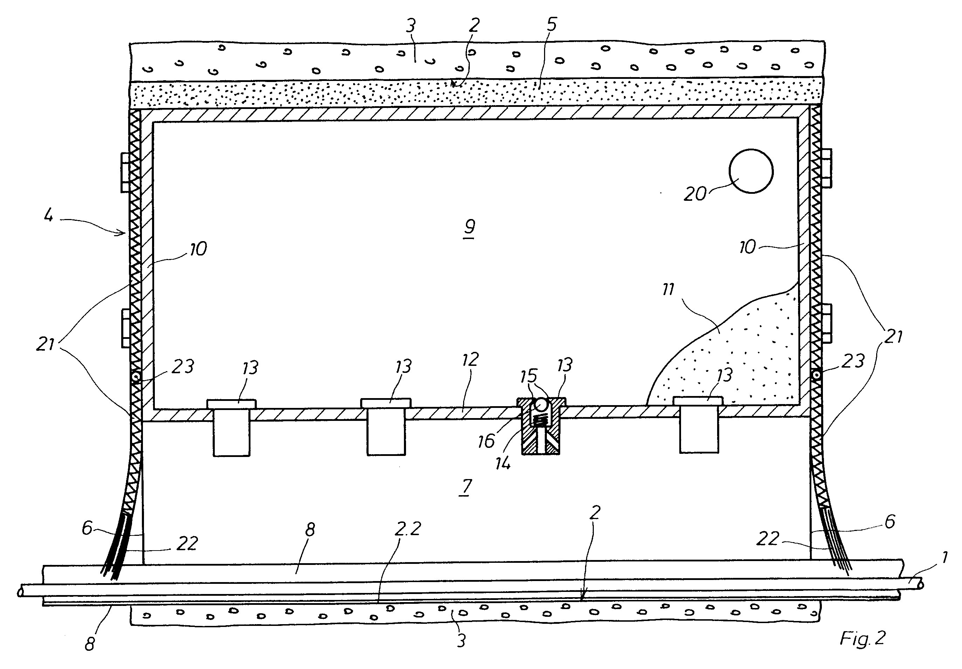

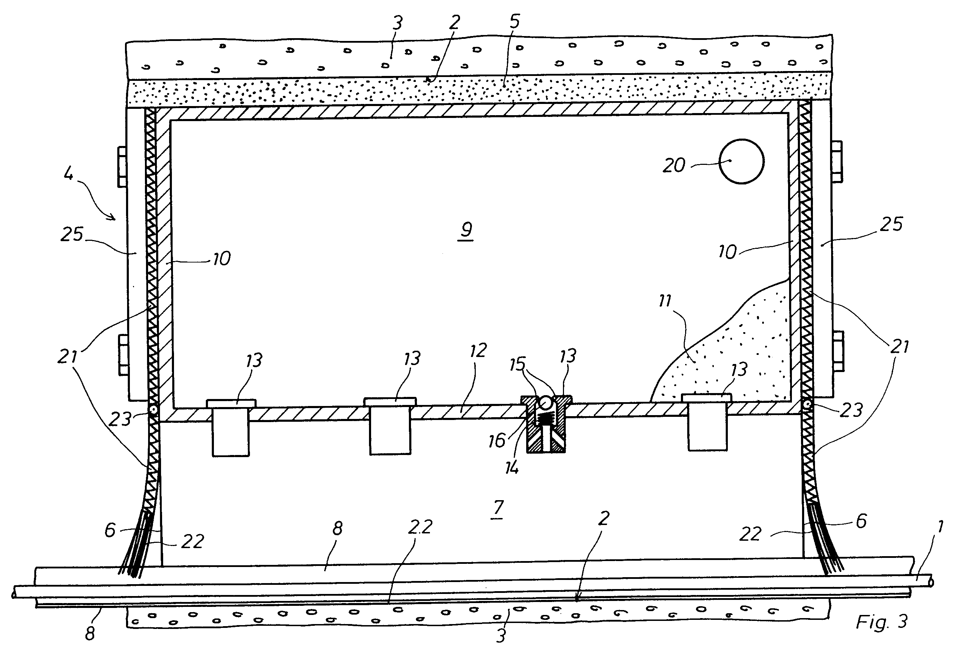

Weiter zeigen alle Ausführungsformen auf beiden Seiten der Wand 3 an den Stirnwänden 10 in die Durchführungsöffnung 7 hängende Schürzen 21 aus einem die Wärme gut leitenden Werkstoff, in den Ausführungsbeispielen aus Kupferdrahtgewebe. Die Schürzen 21 tragen an ihrem unteren Rand zwischen die Leitungen 1 fallende Fransen 22, so daß die Schürzen 21 im Ergebnis die von den Leitungen 1 frei gebliebenen Bereiche der Durchführungsöffnung 7 an beiden Seiten der Wand 3 nach außen abdecken. Die Schürzen 21 stehen in wärmeleitender Verbindung mit den Stirnwänden 10, was in den Ausführungsbeispielen über Gelenke 23 erfolgt, in welchen die Schürzen 21 nach außen und aufwärts in Richtung des in Fig. 1 eingetragenen Pfeiles 24 gegen die Stirnwände 10 verschwenkbar sind. In dieser Stellung können die Schürzen 21 in in der Zeichnung nicht näher dargestellter Weise an den Stirnwänden 10 durch Rasteinrichtungen oder dergl. gehalten sein, so daß sie nicht stören, wenn die Durchführungsöffnung 7 mit Leitungen 1 belegt oder die Leitungsbelegung in der Durchführungsöffnung geändert wird. Im übrigen können die Schürzen 21, wie in den Ausführungsbeispielen nach den Fig. 2 bis 4, die Stirnwände 10 ganz oder teilweise bedecken und/oder, wie im Ausführungsbeispiel nach Fig. 4, auch mit den Wänden der Zusatzbehältnisse 17 in wärmeleitender Verbindung stehen, wozu auch die Wände der Zusatzbehältnisse 17 ganz oder teilweise aus wärmeleitendem Werkstoff, beispielsweise Stahlblech bestehen. Die ganze oder teilweise Bedeckung der Stirnwände 10 und/oder der Wände der Zusatzbehältnisse 17 fördert die Wärmeübertragung von den Schürzen 21 auf das Behältnis 9 bzw. die Zusatzbehältnisse 17 und das in ihnen enthaltene Brandschutz- und/oder Treibmittel. Um im übrigen das Ausmaß der Wärmeübertragung im Brandfall von außen auf die Stirnwände 10 weiter beeinflussen zu können, sind in den Ausführungsbeispielen nach den Fig. 2 und 3 die Stirnwände 10 außen ganz oder teilweise mit Wärmeschutzplatten 25 aus einem unbrennbaren, die Wärme schlecht leitenden Werkstoff bedeckt. Soweit dabei die Stirnwände 10 ganz oder teilweise auch von den Schürzen 21 bedeckt sind, liegen die die Stirnwände 10 bedeckenden Schürzenteile zwischen den Stirnwänden 10 und den Wärmeschutzplatten 25. Die Wärmeschutzplatten 25 bestehen aus Kalziumsilikat. Die Abdichtung 5 des Schottkastens 4 gegen die Wand 3 besteht aus zwischen beiden angeordneten elastischen Matten aus Brandschutz-Schaumstoff. Als Brandschutzmittel empfiehlt sich eine wässerige Schlämme eines feinkörnigen festen Intumeszenzmaterials unter Zugabe von Aluminiumhydroxid Al(OH)₃ als Treibmittel.

## Patentansprüche

1. Vorrichtung zur Brandabschottung einer Wandöffnung (2) für die Durchführung von Leitungen (1), wie elektrische Kabel, Rohre oder dergl., duch eine Wand (3), mit einem abgedichtet gegen die Wand (3) in der Wandöffnung (2) angeordneten Schottkasten (4), der eine die Leitungen (1) aufnehmende Durchführungsöffnung (7) bildet und ein Brandschutzmittel enthält, das erst im Brandfall die Durchführungsöffnung (7) ausfüllt und dabei sein ursprüngliches Volumen infolge von Wärmewirkung entsprechend vergrößert, dadurch gekennzeichnet, daß das Brandschutzmittel von fließfähiger Beschaffenheit ist und sich bei seiner Volumenvergrößerung unter der Wärmeeinwirkung auch verfestigt, daß ferner der Schottkasten (4) auf beiden Seiten der Wand (3) wärmeleitende Stirnwände (10) besitzt und zwischen diesen Stirnwänden (10) ein druckdichtes, das Brandschutzmittel (11) enthaltendes Behältnis (9) bildet, in dem das Brandschutzmittel selbst und/oder ein zusätzlich im Behältnis enthaltenes Treibmittel durch seine Erwärmung im Brandfall einen Druck aufbaut, und daß das Behältnis (9) von der Durchführungsöffnung (7) durch eine Trennwand (12) abgeteilt ist, die sich abhängig vom Druck im Behältnis (9) öffnet und das Brandschutzmittel (11) in die Durchführungsöffnung (7) ausfließen läßt.

2. Vorrichtung nach Anspruch 1, dadurch gekennzeichnet, daß das Behältnis (9) oberhalb der Durchführungsöffnung (7) angeordnet und die ebenfalls wärmeleitende Trennwand (12) vom Boden des Behältnisses gebildet ist.

3. Vorrichtung nach Anspruch 2, dadurch gekennzeichnet, daß das Behältnis (9) und die Trennwand (12) sich über die gesamte Grundrißfläche der Durchführungsöffnung (7) erstrecken.

4. Vorrichtung nach einem der Ansprüche 1 bis 3, dadurch gekennzeichnet, daß in der Trennwand (12) Ventile (13) angeordnet sind, die sich unter dem im Behältnis (9) entstehenden Druck öffnen.

5. Vorrichtung nach Anspruch 4, dadurch gekennzeichnet, daß die Ventile (13) unter der Kraft von Ventilfedern (14) an einem Ventilsitz (15) anliegende Ventilkörper (16) aufweisen, wobei der im Behältnis (9) entstehende Druck die Ventilkörper (16) gegen die Kraft der Ventilfedern (14) von ihrem Ventilsitz (15) abhebt und dadurch die Ventile (13) öffnet.

6. Vorrichtung nach einem der Ansprüche 1 bis 5, dadurch gekennzeichnet, daß zusätzlich zum Behältnis (9) außerhalb der Wandöffnung (2) auf einer Seite oder beiden Seiten der Wand (3) druckdichte Zusatzbehältnisse (17) für das Brandschutzmittel und/oder Treibmittel vorgesehen sind, die mit dem Behältnis (9) so in Verbindung stehen, daß das Brandschutz- und/oder Treibmittel aus den Zusatzbehältnissen (17) in das Behältnis (9) nachströmen kann, wenn nach dem Öffnen der Trennwand (12) das Brandschutzmittel (11) in die Durchführungsöffnung (7) austritt.

7. Vorrichtung nach einem der Ansprüche 1 bis 6, dadurch gekennzeichnet, daß das Behältnis (9) oder die Zusatzbehältnisse (17) über ein Rückschlagventil an eine Verbindungsleitung angeschlossen sind, die mit einem Vorratsgefäß oder einem Versorgungsnetz für das Brandschutz- und/oder Treibmittel in Verbindung steht.

8. Vorrichtung nach einem der Ansprüche 2 bis 7, dadurch gekennzeichnet, daß auf beiden Seiten der Wand (3) an den Stirnwänden (10) in die Durchführungsöffnung (7) hängende Schürzen (21) aus einem die Wärme gut leitenden Werkstoff vorgesehen sind, die in wärmeleitender Verbindung mit den Stirnwänden (10) stehen, mit ihrem unteren freien Rand auf den Leitungen (1) liegen und die Durchführungsöffnung (7) in Leitungslängsrichtung nach außen abdecken.

9. Vorrichtung nach Anspruch 8, dadurch gekennzeichnet, daß die Schürzen (21) an ihrem unteren Rand zwischen die Leitungen (1) fallende Fransen (22) tragen.

10. Vorrichtung nach Anspruch 8 oder 9, dadurch gekennzeichnet, daß die Schürzen (21) aus einem Kupferdrahtgewebe bestehen.

11. Vorrichtung nach einem der Ansprüche 8 bis 10, dadurch gekennzeichnet, daß die Schürzen (21) an den Stirnwänden (10) gelenkig gehalten und dadurch nach außen und aufwärts gegen die Stirnwände (10) verschwenkbar sind.

12. Vorrichtung nach einem der Ansprüche 8 bis 11, dadurch gekennzeichnet, daß die Schürzen (21) die Stirnwände (10) ganz oder teilweise bedecken.

13. Vorrichtung nach Anspruch 12, dadurch gekennzeichnet, daß im Falle von Zusatzbehältnissen (17) auch deren Wände ganz oder teilweise wärmeleitend sind und in wärmeleitender Verbindung mit den Schürzen (21) stehen.

14. Vorrichtung nach einem der Ansprüche 1 bis 13, dadurch gekennzeichnet, daß die Stirnwände (10) außen ganz oder teilweise mit Wärmeschutzplatten (25) aus einem unbrennbaren, die Wärme schlecht leitenden Werkstoff bedeckt sind.

15. Vorrichtung nach Anspruch 14, dadurch gekennzeichnet, daß im Fall von die Stirnwände (10) ganz oder teilweise bedeckenden Schürzen (21) die die Stirnwände bedeckenden Schürzenteile zwischen den Stirnwänden (10) und den Wärmeschutzplatten (25) liegen.

16. Vorrichtung nach Anspruch 14 oder 15, dadurch gekennzeichnet, daß die Wärmeschutzplatten (25) aus Kalziumsilikat bestehen.

17. Vorrichtung nach einem der Ansprüche 1 bis 16, dadurch gekennzeichnet, daß das Brandschutzmittel aus einer wässerigen Schlämme eines feinkörnigen festen Intumeszenzmaterials besteht.

18. Vorrichtung nach einem der Ansprüche 1 bis 16, dadurch gekennzeichnet, daß das Treibmittel aus Aluminiumhydroxid Al(OH)₃ besteht.

## Claims

1. Apparatus for the fire-resistant closure of a wall opening (2) for the passage of conduits (1) such as electrical cables, pipes or the like through a wall (3), having a partitioning casing (4) which is arranged in the wall opening (2) in sealed relationship with the wail (3) and which forms a passage opening (7) for accommodating the conduits (1) and which contains a fire-protection agent which fills the passage opening (7) only in a fire situation and in so doing suitably increases its original volume as a result of the effect of heat characterised in that the fire-protection agent is of a nature such as to be capable of flow and upon its increase in volume also hardens under the effect of heat, that in addition the partitioning casing (4) has heat-conducting end wails (10) on both sides of the wall (3) and between said end walls (10) forms a pressure-tight container (9) which contains the fire-protection agent (11) and in which the fire-protection agent itself and/or a propellant additionally contained in the container, by virtue of its rise in temperature in the fire situation, builds up a pressure, and that the container (9) is divided fro the passage opening (7) by a partition (12) which opens in dependence on the pressure in the container (9) and allows the fire-protection agent (11) to flow out into the passage opening (7).

2. Apparatus according to claim 1 characterised in that the container (9) is arranged above the passage opening (7) and the partition (12) which is also heat-conducting is formed by the bottom of the container.

3. Apparatus according to claim 2 characterised in that the container (9) and the partition (12) extend over the entire area in plan view of the passage opening (7).

4. Apparatus according to one of claims 1 to 3 characterised in that disposed in the partition (12) are valves (13) which open under the pressure occurring in the container (9).

5. Apparatus according to claim 4 characterised in that the valves (13) have valve bodies (16) which bear against a valve seat (15) under the force of valve springs (14), wherein the pressure in the container (9) lifts the valve bodies (16) off their valve seats (15) against the force of the valve springs (14) and thereby opens the valves (13).

6. Apparatus according to one of claims 1 to 5 characterised in that pressure-tight additional containers (17) for the fire-protection agent and/or propellant are provided additionally to the container (9) outside the wall opening (2) on one side or both sides of the wall (3), the additional containers being so communicated with the container ( 9) that the fire-protection agent and/or propellant can flow as a make-up flow from the additional containers (17) into the container ( 9) when after opening of the partition (12) the fire-protection agent (11) discharges into the passage opening (7).

7. Apparatus according to one of claims 1 to 6 characterised in that the container (9) or the additional containers (17) are connected by way of a non-return valve to a communicating conduit which is communicated with a storage receptacle or a supply system for the fire-protection agent and/or propellant.

8. Apparatus according to one of claims 2 to 7 characterised in that provided on both sides of the wall (3) on the end walls (10) are aprons (21) of a material which is a good conductor of heat, which aprons hang into the passage opening (7) and are in heat-conducting relationship with the end walls (10) and lie with their lower free edges on the conduits (1) and which cover the passage opening (7) relative to the exterior in the longitudinal direction of the conduits.

9. Apparatus according to claim 8 characterised in that at their lower edges the aprons (21) carry fringes (22) which fall between the conduits ( 1).

10. Apparatus according to claim 8 or claim 9 characterised in that the aprons (21) comprise a copper wire mesh.

11. Apparatus according to one of claims 8 to 10 characterised in that the aprons are mounted pivotably to the end walls (10) and are thereby pivotable outwardly and upwardly against the side walls (10).

12. Apparatus according to one of claims 8 to 11 characterised in that the aprons (21) entirely or partially cover the end walls (10).

13. Apparatus according to claim 12 characterised in that when additional containers (17) are provided their walls are also entirely or partially heat-conducting and are in heat-conducting relationship with the aprons (21).

14. Apparatus according to one of claims 1 to 13 characterised in that the end walls (10) are entirely or partially covered on their outside with heat-proofing plates (25) comprising an incombustible material which is a poor conductor of heat.

15. Apparatus according to claim 14 characterised in that in the case of aprons (21) which entirely or partially cover the end walls (10) the apron portions which cover the end walls are disposed between the end walls (10) and the heat-proofing plates (25).

16. Apparatus according to claim 14 or claim 15 characterised in that the heat-proofing plates (25) comprising calcium silicate.

17. Apparatus according to one of claims 1 to 16 characterised in that the fire-protection agent comprises an aqueous slurry of a fine-grain solid intumescence material.

18. Apparatus according to one of claims 1 to 16 characterised in that the propellant comprises aluminium hydroxide Al(OH)₃.

## Revendications

1. Dispositif coupe-feu placé dans l'ouverture d'une paroi (2) pour la traversée de conduits (1) tels que des câbles électriques, des tubes ou éléments similaires, à travers une paroi (3), comportant un caisson de cloisonnement (4) disposé dans l'ouverture de paroi (2) de façon étanche contre la paroi (3), lequel caisson constitue une ouverture de traversée (7) recevant les conduits (1) et contient un moyen coupe-feu qui ne remplit l'ouverture de traversée (7) qu'en cas d'incendie en augmentant en conséquence son volume sous l'action de la chaleur, caractérisé en ce que le moyen coupe-feu est de constitution apte à l'écoulement et se solidifie également lors de son augmentation de volume sous l'action de la chaleur, en ce qu'en outre, le caisson de cloisonnement (4) comporte des parois frontales (10) thermoconductrices sur les deux côtés de la paroi (3) et constitue entre ces parois frontales (10) un logement (9) tenant la pression, contenant le moyen coupe-feu (11), dans lequel le moyen coupe-feu lui-même et/ou un agent propulseur contenu en outre dans le logement exerce une pression par son réchauffement en cas d'incendie, et en ce que le logement (9) est séparé de l'ouverture de traversée (7) par une paroi de séparation (12) qui s'ouvre en fonction de la pression dans le logement (9) et laisse s'écouler le moyen coupe-feu (11) dans l'ouverture de traversée (7).

2. Dispositif suivant la revendication 1, caractérisé en ce que le logement (9) est disposé au-dessus de l'ouverture de traversée (7) et en ce que la paroi de séparation (12) également thermoconductrice est constituée par le fond du logement.

3. Dispositif suivant la revendication 2, caractérisé en ce que le logement (9) et la paroi de séparation (12) s étendent sur toute la surface de plan horizontale de l'ouverture de traversée (7).

4. Dispositif suivant l'une des revendications 1 à 3, caractérisé en ce que des soupapes (13) sont disposées dans la paroi de séparation (12), soupapes qui s'ouvrent sous la pression apparaissant dans le logement (9).

5. Dispositif suivant la revendication 4, caractérisé en ce que les soupapes (13) présentent des corps de soupape (16) appuyés sur un siège de soupape (15) sous l'action de ressorts de soupape (14), la pression apparaissant dans le logement (9) soulevant les corps de soupape (16) de leur siège de soupape (15) à l'encontre de la force des ressorts de soupapes (14) et ouvrant ainsi les soupapes (13).

6. Dispositif suivant l'une des revendications 1 à 5, caractérisé en ce que, en plus du logement (9), à l'extérieur de l'ouverture de paroi (2) sur un côté ou sur les deux côtés de la paroi (3) des logements supplémentaires (17) tenant la pression sont prévus pour le moyen coupe-feu et/ou l'agent propulseur, logements supplémentaires qui communiquent avec le logement (9) de telle façon que le moyen coupe-feu et/ou l'agent propulseur peut s'écouler des logements supplémentaires (17) dans le logement (9), lorsque, après l'ouverture de la paroi de séparation (12), le moyen coupe-feu (11) sort pour gagner l'ouverture de traversée (7).

7. Dispositif suivant l'une des revendications 1 à 6, caractérisé en ce que le logement (9) ou les logements supplémentaires (17) sont raccordés par l'intermédiaire d'une soupape anti-retour à un conduit de jonction, qui communique avec un récipient de réserve ou un réseau d'alimentation prévus pour le moyen coupe-feu et/ou l'agent propulseur.

8. Dispositif suivant l'une des revendications 2 à 7, caractérisé en ce que des tabliers (21) suspendus des deux côtés de la paroi (3) sur les parois frontales (10) dans l'ouverture de traversée (7) sont réalisés en une matière bonne conductrice de la chaleur, qui communique de façon thermoconductrice avec les parois frontales (10), sont appuyés par leur bord libre inférieur sur les conduits (1) et couvrent l'ouverture de traversée (7) vers l'extérieur dans le sens de la longueur des conduits.

9. Dispositif suivant la revendication 8, caractérisé en ce que les tabliers (21) portent sur leur bord inférieur des franges (22) tombant entre les conduits (1).

10. Dispositif suivant les revendications 8 ou 9, caractérisé en ce que les tabliers (21) sont composés d'un tissu en fils de cuivre.

11. Dispositif suivant l'une des revendications 8 à 10, caractérisé en ce que les tabliers (21) sont maintenus de façon articulée contre les parois frontales (10) et peuvent donc pivoter vers l'extérieur et vers le haut contre les parois latérales (10).

12. Dispositif suivant l'une des revendications 8 à 11, caractérisé en ce que les tabliers (21) couvrent les parois latérales (10) partiellement ou totalement.

13. Dispositif suivant la revendication 12, caractérisé en ce que, dans le cas de logements supplémentaires (17), les parois de ceux-ci sont également partiellement ou totalement thermoconductrices, et communiquent de façon thermoconductrice avec les tabliers (21).

14. Dispositif suivant l'une des revendications 1 à 13, caractérisé en ce que les parois frontales (10) sont recouvertes à l'extérieur, partiellement ou totalement, par des plaques de protection contre la chaleur (25) constituées d'une matière non combustible, mauvaise conductrice de la chaleur.

15. Dispositif suivant la revendication 14, caractérisé en ce que dans le cas de tabliers (21) couvrant partiellement ou totalement les parois frontales (10), les parties de tablier couvrant les parois frontales sont disposées entre les parois frontales (10) et les plaques de protection contre la chaleur (25).

16. Dispositif suivant la revendication 14 ou 15, caractérisé en ce que les plaques de protection contre la chaleur (25) sont constituées de silicate de calcium.

17. Dispositif suivant l'une des revendications 1 à 16, caractérisé en ce que le moyen coupe-feu est composé d'un coulis aqueux d'un matériau à intumescence à grains fins.

18. Dispositif suivant l'une des revendications 1 à 16, caractérisé en ce que l'agent propulseur est constitué d'hydroxyde d'aluminium Al(OH)₃.
